# EUROPÄISCHE PATENTSCHRIFT

(11) **EP 3 914 971 B1**
(45) Veröffentlichungstag und Bekanntmachung des Hinweises auf die Patenterteilung: **02.09.2026**
(21) Anmeldenummer: 20701750.0
(22) Anmeldetag: 23.01.2020
(51) Int. Cl.: G03H 1/04, G03H 1/20, G03H 1/02, G03H 1/00

(54) **VORRICHTUNG UND VERFAHREN ZUM BELICHTEN EINES VOLUMENHOLOGRAMMS**
DEVICE AND METHOD FOR EXPOSING A VOLUME HOLOGRAM
DISPOSITIF ET PROCÉDÉ D'EXPOSITION D'UN HOLOGRAMME VOLUMIQUE À LA LUMIÈRE

(30) Priorität: 25.01.2019 DE 102019200969
(43) Veröffentlichungstag der Anmeldung: 01.12.2021
(73) Patentinhaber: Bundesdruckerei GmbH, 10969 Berlin (DE)
(72) Erfinder: KUNATH, Christian, 12203 Berlin (DE); SPRENGER, Martin, 10317 Berlin (DE); KLÜNDER, Kathrin, 10997 Berlin (DE); GAHLBECK, Jeffry, 15517 Fürstenwalde (DE)
(74) Vertreter: Patentanwälte Bressel und Partner mbB
(86) Internationale Anmeldenummer: PCT/EP2020/051627
(87) Internationale Veröffentlichungsnummer: WO 2020/152270

(56) Entgegenhaltungen:
- WO-A1-2009/035310
- DE-A1- 102007 042 385
- US-A- 4 895 419

## Beschreibung

Die Erfindung betrifft eine Vorrichtung und ein Verfahren zum Belichten eines Volumenhologramms.

Im Zusammenhang mit Wert- oder Sicherheitsdokumenten werden Hologramme als Sicherheitselemente eingesetzt. Die Hologramme erschweren eine Fälschung oder Nachahmung des Wert- oder Sicherheitsdokuments und erhöhen hierdurch dessen Sicherheit. Beispielhaft sind als Sicherheitsdokumente genannt: Personalausweise, Reisepässe, ID-Karten, Zugangskontrollausweise, Visa, Steuerzeichen, Tickets, Führerscheine, Kraftfahrzeugpapiere, Kreditkarten, beliebige Chipkarten und Haftetiketten (z.B. zur Produktsicherung). Wertdokumente sind beispielsweise Banknoten, Schecks und Postwertzeichen.

Um auch bei einer Vielzahl von Wert- oder Sicherheitsdokumenten Hologramme als Sicherheitsmerkmale einsetzen zu können, müssen Hologramme kopiert werden. Dies erfolgt üblicherweise im sogenannten Kontaktkopieverfahren. Hierzu wird ein zu kopierender Hologrammmaster hergestellt, in dem die holografische Information gespeichert ist. Anschließend wird ein zu belichtendes holografisches Aufzeichnungsmaterial, beispielsweise ein Hologrammfilm aus einem Fotopolymer, flächig an dem Hologrammmaster angeordnet. Wird der Hologrammmaster mit entsprechender Laserstrahlung bestrahlt, so wird das rekonstruierte Hologramm in den Hologrammfilm einbelichtet und hierdurch in diesen hineinkopiert. Eine entsprechende Vorrichtung und ein entsprechendes Verfahren sind in der EP 0 896 260 A2 beschrieben.

Aus der DE 10 2007 042 385 A1 sind ein Verfahren und eine Vorrichtung zum Herstellen eines individualisierten Hologramms bekannt, bei dem ein Lichtstrahl erzeugt wird. Hierfür ist vorgesehen, dass der Lichtstrahl in einem Spatial Light Modulator individuell moduliert wird, holografisches Aufzeichnungsmaterial relativ zu einem holografischen Master anordnet und der individuell modulierte Lichtstrahl so geführt wird, dass zumindest ein Teil des individuell modulierten Lichtstrahls an dem holografischen Master gebeugt und/oder reflektiert wird und in dem holografischen Aufzeichnungsmaterial ein das individualisierte Hologramm repräsentierendes Interferenzmuster gebildet wird, wobei der individuell modulierte Lichtstrahl relativ zu dem holografischen Aufzeichnungsmaterial und dem holografischen Master bewegt wird, um den gesamten holografischen Master abzuscannen, wobei das Aufzeichnungsmaterial anliegend an eine zylindrische Trommel oder ein zylindrisches Trommelsegment angeordnet wird und die Trommel beim Abtasten des holografischen Masters um eine Trommelachse der Trommel oder des Trommelsegments gedreht wird.

Aus der US 4 895 419 A ist ein Verfahren zur Herstellung eines Reflexionshologramms bekannt, das das Anbringen eines Transmissionshologramms im Register mit einem Teil des transparenten lichtempfindlichen holografischen Materials umfasst, das zwischen den Mitteln vorhanden ist, mit denen durch das Transmissionshologramm übertragenes Licht nullter Ordnung abgeschnitten wird, wobei auf jeder Seite der Anordnung, die das Hologramm und das holographische Material umfasst, eine lichtreflektierende Oberfläche vorhanden ist, die dann einen Lichtstrahl von einer Laserquelle dazu bringt, durch ein holographisches optisches Element, das den Strahl in zwei Strahlen aufspaltet und bewirkt, dass beide Strahlen im Register sowohl über die gesamte Oberfläche des Transmissionshologramms als auch über das holographische Material scannen, indem die Strahlen auf beide reflektierenden Oberflächen gerichtet werden, sodass ein Strahl von einer der reflektierenden Oberflächen reflektiert wird und beim Durchgang durch das Transmissionshologramm die Bildinformationen aufnimmt und durch die Einrichtung zum Ausschneiden des Lichts nullter Ordnung zum Teil des transparenten lichtempfindlichen holographischen Materials geht, wo er mit dem anderen Strahl interferiert, der von der anderen reflektierenden Oberfläche in das holographische Material reflektiert wird. Anschließend wird das holographische Material verarbeitet, um das holographische Bild darin zu fixieren.

Aus der WO 2009/035310 A1 ist ein Verfahren zum Kontaktkopieren von Hologrammen und holographischen Drucken bekannt. Beschrieben ist das Kopieren von Hologrammen und der Herstellung von Hologrammen vom Denysiuk-Typ. Das Verfahren umfasst Schritte, bei denen unbelichtetes Fotomaterial parallel zur Masterhologrammebene platziert wird und mit spaltförmiger kohärenter Strahlung beleuchtet wird, wodurch eine Beleuchtungszone erzeugt wird, die parallel zur Projektion der kohärenten Strahlungsrichtung auf die Masterhologrammebene ist, wobei sich diese Zone auf dem unbelichteten Fotomaterial und den Masterhologrammoberflächen in Richtung senkrecht zu der Projektion bewegt.

Beim Kopieren des Hologrammmasters in das holografische Aufzeichnungsmaterial wird eine Vorrichtung zum Belichten des Hologramms verwendet, welche speziell für das zu kopierende Hologramm ausgebildet und konfiguriert ist. Sämtliche optischen Elemente, welche zum Belichten benötigt werden, sind fest verbaut und müssen bei einer Änderung des zu kopierenden Hologramms ausgetauscht und neu justiert werden.

Der Erfindung liegt die Aufgabe zu Grunde, eine Vorrichtung und ein Verfahren zum Belichten eines Volumenhologramms zu schaffen, bei denen das Belichten verbessert, insbesondere flexibler, durchgeführt werden kann.

Die Aufgabe wird erfindungsgemäß durch eine Vorrichtung mit den Merkmalen des Patentanspruchs 1 und ein Verfahren mit den Merkmalen des Patentanspruchs 7 gelöst. Vorteilhafte Ausgestaltungen der Erfindung ergeben sich aus den Unteransprüchen.

Eine Grundidee der Erfindung ist, einen optischen Aufbau einer Vorrichtung zum Belichten eines Volumenhologramms derart auszubilden und anzuordnen, dass dieser auf einfache Weise flexibel verändert werden kann, wenn das zu kopierende Hologramm und/oder das holografische Aufzeichnungsmaterial und/oder eine Belichtungsgeometrie verändert werden. Eine solche flexible Änderung ist beispielsweise erforderlich, wenn unterschiedliche Volumenhologramme an unterschiedlichen Positionen in verschiedene Wert- oder Sicherheitsdokumente kopiert werden sollen. Auch ein Format der Wert- oder Sicherheitsdokumente kann variieren. Erfindungsgemäß wird eine von mindestens einer Laserstrahlungsquelle bereitgestellte kohärente Laserstrahlung mittels eines optischen Scanners gescannt, das heißt auf ein zweidimensional ausgedehntes Strahlprofil gebracht. Die gescannte Laserstrahlung wird anschließend auf einen Modulator abgebildet. Mit Hilfe des Modulators kann eine Strahlformung vorgenommen werden, das heißt der Modulator kann insbesondere als variable bzw. flexibel einstellbare Blende verwendet werden, indem gezielt bestimmte Bereiche des Strahlprofils transmittiert bzw. reflektiert werden und andere nicht. Ferner kann mittels des Modulators auch eine Individualisierung einzelner zu belichtender Volumenhologramme vorgenommen werden. Nach Abbilden der gescannten und modulierten Laserstrahlung über eine Abbildungsoptik wird diese anschließend über mindestens einen Umlenkspiegel auf ein Belichtungsfeld einer Halteeinrichtung umgelenkt. Erfindungsgemäß ist der Umlenkspiegel relativ zu dem Belichtungsfeld drehbar und positionierbar ausgebildet, sodass die gescannte und modulierte Laserstrahlung durch Umlenken über den mindestens einen Umlenkspiegel beliebig innerhalb des Belichtungsfelds positionierbar ist. Anders ausgedrückt lässt sich insbesondere eine Orientierung des mindestens einen Umlenkspiegels relativ zur optischen Achse durch eine Rotationsbewegung um mindestens eine Drehachse des mindestens einen Umlenkspiegels verändern. Ferner lässt sich insbesondere eine Position des mindestens einen Umlenkspiegels relativ zum Belichtungsfeld durch eine Translationsbewegung verändern. Insbesondere durch den Modulator und den beweglichen Umlenkspiegel kann die Vorrichtung daher beliebig an verschiedene Hologrammmaster und/oder Belichtungsgeometrien, insbesondere verschiedene Positionen im Belichtungsfeld und/oder Formate des Wert- oderSicherheitsdokuments angepasst werden. Dies erlaubt eine deutlich gesteigerte Flexibilität und verringerte Umrüstzeiten.

Insbesondere wird eine Vorrichtung zum Belichten eines Volumenhologramms geschaffen, mit einem optischen Aufbau, wobei der optische Aufbau entlang einer optischen Achse umfasst: mindestens eine Laserstrahlungsquelle zum Bereitstellen einer kohärenten Laserstrahlung, mindestens einen optischen Scanner zum Scannen der Laserstrahlung, einen Modulator zum Modulieren der gescannten Laserstrahlung, eine Abbildungsoptik zum Abbilden der modulierten Laserstrahlung, mindestens einen Umlenkspiegel zum Umlenken der abgebildeten Laserstrahlung, und eine Halteeinrichtung mit einem Belichtungsfeld zum Halten eines Hologrammmasters und eines zu belichtenden holografischen Aufzeichnungsmaterials, wobei der Umlenkspiegel relativ zu dem Belichtungsfeld drehbar und positionierbar ausgebildet ist, sodass die gescannte und modulierte Laserstrahlung durch Umlenken über den mindestens einen Umlenkspiegel beliebig innerhalb des Belichtungsfelds positionierbar ist.

Ferner wird ein Verfahren zum Belichten eines Volumenhologramms zur Verfügung gestellt, wobei das Belichten mittels einer Vorrichtung mit einem optischen Aufbau durchgeführt wird, wobei der optische Aufbau entlang einer optischen Achse mindestens eine Laserstrahlungsquelle zum Bereitstellen einer kohärenten Laserstrahlung, mindestens einen optischen Scanner zum Scannen der Laserstrahlung, einen Modulator zum Modulieren der gescannten Laserstrahlung, eine Abbildungsoptik zum Abbilden der modulierten Laserstrahlung, mindestens einen Umlenkspiegel zum Umlenken der abgebildeten Laserstrahlung und eine Halteeinrichtung mit einem Belichtungsfeld zum Halten eines Hologrammmasters und eines zu belichtenden holografischen Aufzeichnungsmaterials umfasst, wobei der Umlenkspiegel relativ zum Belichtungsfeld drehbar und positionierbar ausgebildet ist, sodass die gescannte und modulierte Laserstrahlung durch Umlenken über den mindestens einen Umlenkspiegel beliebig innerhalb des Belichtungsfelds positionierbar ist, wobei das Verfahren folgende Schritte umfasst:
- Einstellen der mindestens einen Laserstrahlungsquelle, des mindestens einen optischen Scanners, des Modulators, der Abbildungsoptik und des mindestens einen Umlenkspiegels in Abhängigkeit eines zu kopierenden Hologrammmasters und eines zu belichtenden holografischen Aufzeichnungsmaterials,
- Erzeugen von kohärenter Laserstrahlung mittels der mindestens einen Laserstrahlungsquelle,
- Scannen der kohärenten Laserstrahlung mittels des optischen Scanners,
- Modulieren der gescannten Laserstrahlung mittels des Modulators,
- Abbilden der gescannten und modulierten Laserstrahlung mittels der Abbildungsoptik,
- Umlenken der abgebildeten Laserstrahlung mittels des mindestens einen Umlenkspiegels auf eine vorgegebene Position innerhalb des Belichtungsfelds
- Bestrahlen des Hologrammmasters und des holografischen Aufzeichnungsmaterials mit der umgelenkten Laserstrahlung für eine vorgegebene Zeit.

Als Laserstrahlungsquelle werden insbesondere Laser verwendet, welche im sichtbaren Wellenlängenbereich emittieren. Hierbei wird die Wellenlänge entsprechend einer vorgesehenen Rekonstruktionswellenlänge des zu kopierenden Volumenhologramms gewählt. Es kann auch vorgesehen sein, dass mehrere Laserstrahlungsquellen verwendet werden, beispielsweise mit jeweiligen Wellenlängen für die Spektralfarben Rot, Grün und Blau. Die Vorrichtung umfasst dann zusätzlich insbesondere halbdurchlässige Spiegel, sodass sämtliche Laserstrahlungsquellen eine Laserstrahlung in einen Strahlengang auf der optischen Achse einkoppeln können.

Als holografisches Aufzeichnungsmaterial wird jedes Material bezeichnet, welches geeignet ist, um darin ein Volumenhologramm einzubelichten. Insbesondere kann ein holografisches Aufzeichnungsmaterial ein Hologrammfilm sein. Insbesondere eignen sich auf Fotopolymerbasis hergestellte Hologrammfilme. Es können jedoch auch Hologrammfilme verwendet werden, die auf Silberhalogenidbasis hergestellt sind, insbesondere gebleichte Silberhalogenidfilme. Andere Materialien sind Dichromatgelantine oder photorefraktive Kristalle. Es wird im Folgenden jeweils davon ausgegangen, dass das holografische Aufzeichnungsmaterial bzw. ein Hologrammmaster jeweils glatt flächig und eben ausgebildet sind. Kleinere Abweichungen zur Beseitigung von Abbildungsfehlern oder Ähnlichem sind hiervon nicht berührt.

Ein Modulator ist insbesondere ein Spatial Light Modulator (SLM). Ein Spatial Light Modulator erlaubt eine zweidimensional ortsaufgelöste Beleuchtung bzw. Bestrahlung eines meist flächigen Gegenstandes mit modulierter Intensität. Hierbei kann es sich beispielsweise um einen DMD (Digital Micro Mirror Device) Chip, ein LCD (Liquid Crystal Display) Transmissionsdisplay oder ein LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen.

Als individualisierend wird eine Information angesehen, die einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb einer Gesamtmenge der Geldscheine individualisierender Code ist die Wertigkeit. Für einen Geldschein individualisierend ist die Seriennummer. Beispiele für nicht individualisierende Informationen sind beispielsweise ein Wappen, ein Sigel, ein Hoheitszeichen einer ausstellenden Behörde usw.

Insbesondere sollen die Vorrichtung und das Verfahren dazu verwendet werden, Volumenhologramme in Wert- oder Sicherheitsdokumente hineinzukopieren. Hierzu wird beispielsweise in einem noch nicht mit einem Volumenhologramm versehenen Rohling des Wert- oder Sicherheitsdokuments ein gegebenenfalls individualisiertes Volumenhologramm hineinbelichtet. Die vorgegebene Zeit ist hierbei insbesondere die Zeit, die benötigt wird, um das holografische Aufzeichnungsmaterial ausreichend zu belichten.

Eine weitere Verbesserung der Vorrichtung lässt sich erzielen, wenn der Umlenkspiegel motorisiert und automatisch angetrieben werden kann. In einer Ausführungsform ist deshalb vorgesehen, dass der mindestens eine Umlenkspiegel eine Antriebseinrichtung umfasst, wobei die Antriebseinrichtung derart ausgebildet ist, den mindestens einen Umlenkspiegel gesteuert zu drehen und/oder zu positionieren. Dies erlaubt es insbesondere, eine Umrüstung der Vorrichtung ohne manuelle Justage vornehmen zu können. Das Umrüsten der Vorrichtung für das Kopieren einer Vielzahl von Hologrammen kann hierdurch automatisch gesteuert durchgeführt werden.

Um eine Flexibilität weiter zu erhöhen, kann die optische Anordnung weitere optische Bauelemente umfassen. In einer Ausführungsform ist vorgesehen, dass die optische Anordnung mindestens einen weiteren Umlenkspiegel umfasst. Hierdurch kann eine Belichtungsgeometrie der Laserstrahlung beim Belichten noch flexibler eingestellt werden.

Insbesondere kann vorgesehen sein, dass der mindestens eine weitere Umlenkspiegel drehbar und/oder positionierbar ist. Ferner kann auch bei dem mindestens einen weiteren Umlenkspiegel vorgesehen sein, dass auch dieser mittels einer zugehörigen Antriebseinrichtung gesteuert gedreht und/oder positioniert wird.

Eine vollautomatische Umrüstung der gesamten optischen Anordnung ermöglicht das Einstellen sämtlicher Parameter der Vorrichtung. In einer Ausführungsform ist deshalb vorgesehen, dass die Vorrichtung eine Steuerung umfasst, wobei die Steuerung derart ausgebildet ist, die mindestens eine Laserstrahlungsquelle und/oder den mindestens einen optischen Scanner und/oder den Modulator und/oder die Abbildungsoptik und/oder den mindestens einen Umlenkspiegel zu steuern.

Beim Verfahren ist entsprechend vorgesehen, dass das Einstellen der mindestens einen Laserstrahlungsquelle und/oder des mindestens einen optischen Scanners und/oder des Modulators und/oder der Abbildungsoptik und/oder des mindestens einen Umlenkspiegels mittels einer Steuerung der Vorrichtung erfolgt.

In einer weiterbildenden Ausführungsform ist vorgesehen, dass die Steuerung einen Speicher umfasst, wobei in dem Speicher mindestens ein Satz mit Parametern zum Steuern der mindestens einen Laserstrahlungsquelle und/oder dem mindestens einen optischen Scanner und/oder dem Modulator und/oder der Abbildungsoptik und/oder dem mindestens einen Umlenkspiegel hinterlegt ist, wobei die Steuerung derart ausgebildet ist, den Satz mit Parametern aus dem Speicher abzurufen und die Parameter des abgerufenen Satzes durch entsprechendes Ansteuern einzustellen. Hierdurch kann beispielsweise ein Satz mit Parametern zum Belichten eines bestimmten Volumenhologramms in den Speicher geladen werden und anschließend von der Steuerung zum Belichten abgerufen werden. Ferner kann auch vorgesehen sein, dass eine Vielzahl von Sätzen mit Parametern, beispielswiese von immer wiederkehrenden "Rezeptprogrammen", im Speicher hinterlegt ist und der benötigte Satz bei Bedarf abgerufen wird.

Beim Verfahren ist entsprechend vorgesehen, dass zum Einstellen ein Satz mit Parametern aus dem Speicher abgerufen wird und die Parameter des abgerufenen Satzes mittels der Steuerung durch entsprechendes Ansteuern eingestellt werden.

In einer weiteren Ausführungsform ist vorgesehen, dass die Halteeinrichtung mindestens zwei Hologrammmasteraufnahmen umfasst, welche dazu ausgebildet sind, jeweils einen Hologrammmaster zu halten, wobei die Halteeinrichtung ferner derart ausgebildet ist, jede der Hologrammmasteraufnahmen mit einem darin aufgenommenen Hologrammmaster in das Belichtungsfeld positionieren zu können. Hierdurch kann eine Flexibilität der Vorrichtung weiter erhöht werden. Werden beispielsweise zwei unterschiedliche Volumenhologramme immer wieder benötigt, so können die beiden zugehörigen Hologrammmaster jeweils in eine der Hologrammmasteraufnahmen angeordnet werden. Je nach Bedarf wird dann der benötigte Hologrammmaster in das Belichtungsfeld positioniert.

Beim Verfahren ist entsprechend vorgesehen, dass zum Einstellen eine ausgewählte der Hologrammmasteraufnahmen mit dem darin aufgenommenen Hologrammmaster in das Belichtungsfeld positioniert wird

Es kann zusätzlich vorgesehen sein, dass die Halteeinrichtung drehbar und/oder positionierbar ist. Dies bedeutet, dass die Halteeinrichtung in seiner Orientierung bezüglich der optischen Achse rotiert und bezüglich der optischen Achse translatorisch verfahren werden kann. Dies ermöglicht einen besonders kompakten Aufbau, insbesondere wenn ein Hologramm unter einem Winkel von dem Hologrammmaster in das holografische Aufzeichnungsmaterial kopiert werden soll.

Nachfolgend wird die Erfindung anhand bevorzugter Ausführungsbeispiele unter Bezugnahme auf die Figuren näher erläutert. Hierbei zeigen:
Fig. 1 eine schematische Darstellung einer Ausführungsform der Vorrichtung zum Belichten eines Volumenhologramms in einer Seitenansicht;
Fig. 2 eine schematische Darstellung einer weiteren Ausführungsform der Vorrichtung zum Belichten eines Volumenhologramms in einer Draufsicht;
Fig. 3 ein schematisches Ablaufdiagramm des Verfahrens zum Belichten eines Volumenhologramms.

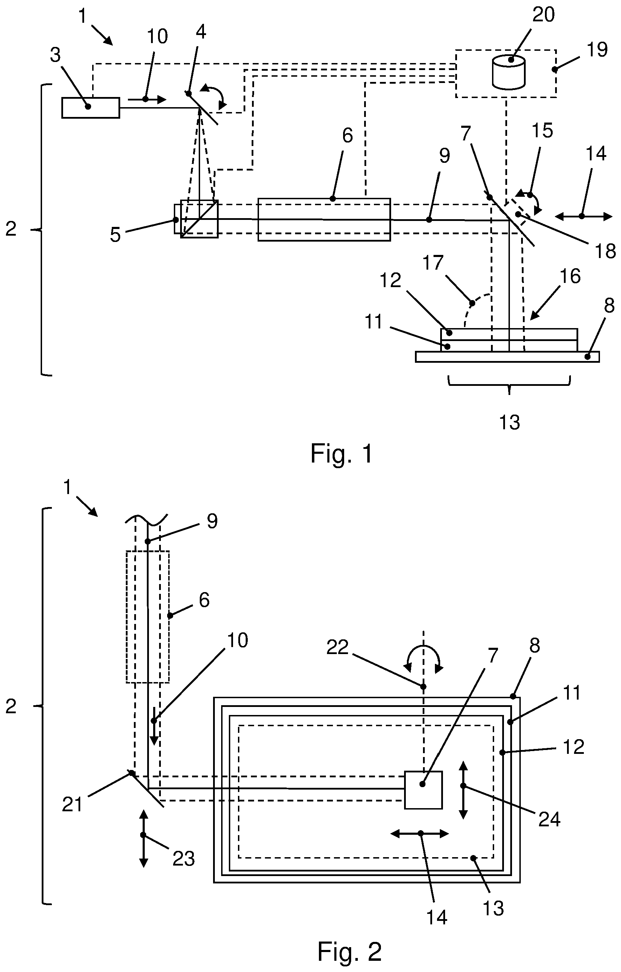

In Fig. 1 ist eine schematische Darstellung einer Ausführungsform der Vorrichtung 1 zum Belichten eines Volumenhologramms in einer Seitenansicht gezeigt. Die Vorrichtung 1 umfasst einen optischen Aufbau 2. Der optische Aufbau 2 umfasst entlang einer optischen Achse 9 eine Laserstrahlungsquelle 3, einen optischen Scanner 4, einen Modulator 5, eine Abbildungsoptik 6, einen Umlenkspiegel 7 und eine Halteeinrichtung 8.

In der Halteeinrichtung 8 können ein Hologrammmaster 11 und ein holographisches Aufzeichnungsmaterial 12 angeordnet werden.

Die Laserstrahlungsquelle 3 stellt eine kohärente Laserstrahlung 10 mit einer zur Rekonstruktion des Hologrammmasters 11 vorgesehenen Wellenlänge bereit. Die Laserstrahlung 10 wird mittels des optischen Scanners 4 gescannt. Der optische Scanner 4 ist hierbei ein zweidimensionaler optischer Scanner 4, sodass die Laserstrahlung 10 in zwei Dimensionen gescannt und hierdurch ein zweidimensionales Strahlprofil erzeugt werden kann.

Die in ein zweidimensionales Strahlprofil aufgeweitete Laserstrahlung 10 wird auf den Modulator 5 abgebildet. Der Modulator 5 kann insbesondere ein LCoS sein. In dem Modulator 5 kann die gescannte Laserstrahlung 10 moduliert werden. Eine solche Modulation kann beispielsweise ein blendenartiges Begrenzen des Strahlprofils der Laserstrahlung 10 umfassen. Mithilfe des Modulators 5 kann die gescannte Laserstrahlung 10 jedoch auch insbesondere derart moduliert werden, dass das zu kopierende Volumenhologramm individualisiert bzw. personalisiert wird.

Die modulierte Laserstrahlung 10 wird anschließend über die Abbildungsoptik 6 auf den Umlenkspiegel 7 abgebildet. Die Abbildungsoptik 6 umfasst insbesondere ein Linsensystem (nicht gezeigt), welches einer Fokussierung der gescannten und modulierten Laserstrahlung 10 dient. Fokussiert wird hierbei insbesondere mit Bezug auf den Hologrammmaster 11. Der Umlenkspiegel 7 lenkt die gescannte und modulierte Laserstrahlung 10 auf den Hologrammmaster 11 und das holographische Aufzeichnungsmaterial 12. Der Umlenkspiegel 7 ist relativ zu einem Belichtungsfeld 13 drehbar und positionierbar ausgebildet. Dies bedeutet, dass er sowohl hinsichtlich einer Rotationsachse drehbar ist als auch zumindest in eine Richtung relativ zum Belichtungsfeld 13 in seiner Position variieren bzw. eingestellt werden kann. Hierdurch ist es möglich, im gesamten Belichtungsfeld 13 ein Volumenhologramm von dem Hologrammmaster 11 in das holographische Aufzeichnungsmaterial 12 zu kopieren. Dies ermöglicht es, insbesondere nach einem Austausch des Hologrammmasters 11 ohne größere Umrüstzeiten die Vorrichtung 1 auf den neuen Hologrammmaster 11 anzupassen. Hierzu wird eine Position des Umlenkspiegels 7 in einer Richtung 14 relativ zum Belichtungsfeld 13 verändert. Gegebenenfalls wird der Umlenkspiegel 7 zusätzlich entsprechend einem vorgegebenen Winkel 15 gedreht. Hierdurch wird es möglich, beim Belichten des Volumenhologramms sowohl eine Belichtungsposition 16 innerhalb des Belichtungsfeldes 13 als auch einen Belichtungswinkel 17 einzustellen.

Es kann insbesondere vorgesehen sein, dass der Umlenkspiegel 7 eine Antriebseinrichtung 18 umfasst, wobei die Antriebseinrichtung 18 derart ausgebildet ist, den Umlenkspiegel 7 gesteuert drehen und positionieren zu können. Das Ansteuern erfolgt beispielsweise durch eine entsprechend hierfür vorgesehene Steuerung 19.

Es kann ferner vorgesehen sein, dass die Steuerung 19 auch die Laserstrahlungsquelle 3, den optischen Scanner 4, den Modulator 5 und die Abbildungsoptik 6 steuert.

Ferner kann vorgesehen sein, dass die Steuerung 19 einen Speicher 20 umfasst, wobei in dem Speicher 20 mindestens ein Satz mit Parametern zum Steuern der Laserstrahlungsquelle 3, dem optischen Scanner 4, dem Modulator 5, der Abbildungsoptik 6 und dem Umlenkspiegel 7 hinterlegt ist. Zum Belichten ruft die Steuerung 19 den Satz mit Parametern aus dem Speicher 20 ab und stellt die Parameter des abgerufenen Satzes durch entsprechendes Ansteuern an der Laserstrahlungsquelle 3, dem optischen Scanner 4, dem Modulator 5, der Abbildungsoptik 6 und dem
Umlenkspiegel 7 ein.

Anschließend wird der Hologrammmaster 11 und das holografische Aufzeichnungsmaterial 12 durch entsprechendes Ansteuern der Laserstrahlungsquelle 3, des optischen Scanners 4 und des Modulators 5 mit der kohärenten Laserstrahlung 10 bestrahlt und das Volumenhologramm hierdurch in die holografische Aufzeichnungsschicht 12 kopiert.

Es kann zusätzlich vorgesehen sein, dass die Halteeinrichtung 8 mindestens zwei Hologrammmasteraufnahmen umfasst, welche dazu ausgebildet sind, jeweils einen Hologrammmaster 11 zu halten. Die Halteeinrichtung 8 kann dann eine ausgewählte der Hologrammmasteraufnahmen mit einem darin aufgenommenen Hologrammmaster 11 in das Belichtungsfeld 13 positionieren. Hierdurch wird es möglich, eine Vielzahl von Hologrammmastern 11 vorzuhalten und bei Bedarf manuell oder automatisch zum Belichten in das Belichtungsfeld 13 zu positionieren.

Der gezeigte Hologrammmaster 11 und das gezeigte holografische Aufzeichnungsmaterial 12 sind hierbei nur schematisch dargestellt. Die Maße können variieren. Insbesondere können der Hologrammmaster 11 und das holografische Aufzeichnungsmaterial 11 unterschiedliche Maße aufweisen. Auch können der Hologrammmaster 11 und/oder das holografische Belichtungsmaterial 12 Maße aufweisen, die hinsichtlich ihrer Ausdehnung kleiner als das Belichtungsfeld 13 ausgebildet sind.

In Fig. 2 ist eine schematische Darstellung einer weiteren Ausführungsform der Vorrichtung 1 zum Belichten eines Volumenhologramms in einer Draufsicht auf den optischen Aufbau 2 gezeigt. Die gezeigte Ausführungsform ist prinzipiell identisch zu der in der Fig. 1 gezeigten Ausführungsform, jedoch umfasst die Vorrichtung 1 zusätzlich einen weiteren Umlenkspiegel 21. Der optische Aufbau 2 ist hierbei nur teilweise gezeigt, die Laserstrahlungsquelle 3, der optische Scanner 4 und der Modulator 5 (vgl. Fig. 1) sind nicht gezeigt.

Die Vorrichtung 1 umfasst im Gegensatz zu der in der Fig. 1 gezeigten Ausführungsform zwei Umlenkspiegel 7, 21. Der Umlenkspiegel 7 ist bezüglich zumindest einer Rotationsachse 22 drehbar und hinsichtlich zweier Richtungen 14, 24 positionierbar. Der weitere Umlenkspiegel 21 ist in dieser Ausführungsform hinsichtlich einer Richtung 23 positionierbar. Hierbei ist insbesondere vorgesehen, dass Positionen der beiden Umlenkspiegel 7, 21 in Bezug auf die Richtungen 23, 24 miteinander gekoppelt sind.

Hierdurch erweitert sich das Belichtungsfeld 13, in dem der Hologrammmaster 11 und das darauf angeordnete holografische Aufzeichnungsmaterial 12 mit Laserstrahlung 10 bestrahlt werden können. Das Volumenhologramm kann daher an jeder beliebige zweidimensionalen Position innerhalb des Belichtungsfeldes 13 von dem Hologrammmaster 11 in das holografische Aufzeichnungsmaterial 12 kopiert werden.

Der weitere Umlenkspiegel 21 kann hierbei ebenfalls von der Steuerung 19 (vgl. Fig. 1) gesteuert werden. Die Steuerung 19 steuert die Umlenkspiegel 7, 21 dann jeweils derart an, dass die Laserstrahlung 10 an der vorgesehenen Position innerhalb des Belichtungsfeld 13 den Hologrammmaster 11 und das holografische Aufzeichnungsmaterial 12 bestrahlen und das Volumenhologramm hierdurch kopiert wird.

Auch in der Fig. 2 sind der gezeigte Hologrammmaster 11 und das gezeigte holografische Aufzeichnungsmaterial 12 nur schematisch dargestellt. Die Maße können variieren. Insbesondere können der Hologrammmaster 11 und das holografische Aufzeichnungsmaterial 11 unterschiedliche Maße aufweisen. Auch können der Hologrammmaster 11 und/oder das holografische Belichtungsmaterial 12 Maße aufweisen, die hinsichtlich ihrer Ausdehnung kleiner als das Belichtungsfeld 13 ausgebildet sind.

Es kann in den in Fig. 1 und Fig. 2 gezeigten Ausführungsformen zusätzlich vorgesehen sein, dass die Halteeinrichtung 8 drehbar und/oder positionierbar ist. Dies bedeutet, dass die Halteeinrichtung 8 in seiner Orientierung bezüglich der optischen Achse 9 rotiert und bezüglich der optischen Achse 9 translatorisch verfahren werden kann. Dies ermöglich einen besonders kompakten Aufbau, insbesondere wenn ein Hologramm unter einem Winkel von dem Hologrammmaster 11 in das holografische Aufzeichnungsmaterial 12 kopiert werden soll.

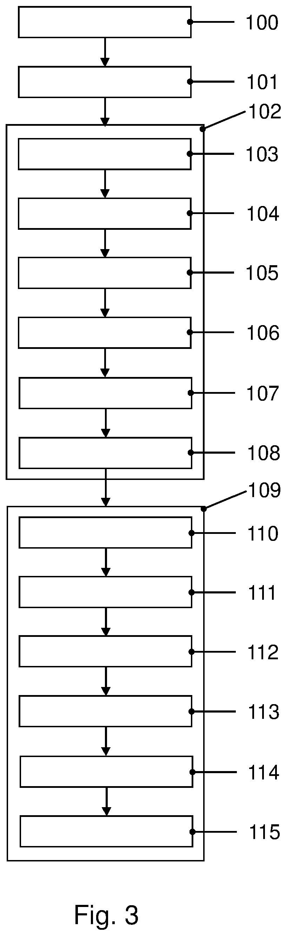

In Fig. 3 ist ein schematisches Ablaufdiagramm des Verfahrens zum Belichten eines Volumenhologramms, beispielsweise mittels der in der Fig. 2 gezeigten Ausführungsform der Vorrichtung gezeigt.

In einem ersten Verfahrensschritt 100 wird zu einem Hologrammmaster ein Rezeptprogramm vorgegeben bzw. ausgewählt. Dies kann beispielsweise erfolgen, indem eine Steuerung der Vorrichtung ein solches Rezeptprogramm über eine Benutzerschnittstelle bei einem Benutzer abfragt oder auf sonstige Weise auswählt. Das Rezeptprogramm kann beispielsweise in einem Speicher der Steuerung hinterlegt sein und umfasst einen Satz von Parametern zum Einstellen der Vorrichtung. Insbesondere umfasst der Satz Parameter zum Einstellen der Laserstrahlungsquelle, des Scanners, des Modulators, der Abbildungsoptik, des mindestens einen Umlenkspiegels und gegebenenfalls der Halteeinrichtung. Das Rezeptprogramm gibt insbesondere an, wo und in welcher Weise, z.B. unter welchem Belichtungs- bzw. Rekonstruktionswinkel, das Volumenhologramm vom Hologrammmaster in das holografische Aufzeichnungsmaterial kopiert werden soll.

In einem Verfahrensschritt 101 wird der zum ausgewählten Rezeptprogramm gehörende Satz Parameter aus dem Speicher der Steuerung der Vorrichtung abgefragt. Anschließend stellt die Steuerung in einem Verfahrensschritt 102 die abgefragten Parameter an den einzelnen Elementen des optischen Aufbaus ein und führt hierzu die Verfahrensschritte 103-108 aus.

Im Verfahrensschritt 103 werden die Parameter der Laserstrahlungsquelle eingestellt. Parameter können beispielsweise eine Wellenlänge und/oder eine Leistung der bereitgestellten Laserstrahlung sein.

Im Verfahrensschritt 104 werden die Parameter des Scanners eingestellt. Beispielsweise werden ein zweidimensionaler Scanbereich und/oder eine Scanfrequenz eingestellt.

Im Verfahrensschritt 105 werden die Parameter des Modulators eingestellt. Insbesondere kann hierbei ein Strahlprofil der gescannten und hierdurch in ihrem Strahlprofil aufgeweiteten Laserstrahlung begrenzt werden, indem einzelne Bereiche transmittiert bzw. reflektiert werden, andere Bereiche hingegen nicht. Ferner kann der Modulator auch eine Individualisierung vornehmen, indem einzelne Bereiche der Laserstrahlung unterdrückt werden. Die Bereiche werden auf Grundlage einer bereitgestellten Individualisierungsinformation festgelegt. Diese Individualisierungsinformation kann beispielsweise von einer Datenbank abgefragt und/oder von der Steuerung bereitgestellt werden.

Im Verfahrensschritt 106 werden die Parameter der Abbildungsoptik eingestellt. Dies können beispielsweise eine Fokussierung sein bzw. zugehörige Linsenpositionen von Linsen in der Abbildungsoptik.

Im Verfahrensschritt 107 werden die Parameter der Umlenkspiegel eingestellt. Die Parameter umfassen insbesondere die Positionen der Umlenkspiegel, sodass die abgebildete und umgelenkte Laserstrahlung an einer ganz bestimmten Position bzw. in einem ganz bestimmten Bereich im Belichtungsfeld auf den Hologrammmaster und das holografische Belichtungsmaterial trifft. Die Parameter können auch einen Winkel bzw. eine Winkelposition einer Drehachse der Umlenkspiegel umfassen. Hierdurch kann beispielsweise ein Winkel festgelegt werden, unter dem das Volumenhologramm rekonstruiert und vom Hologrammmaster in das holografische Aufzeichnungsmaterial kopiert wird.

In einem Verfahrensschritt 108 kann zusätzlich vorgesehen sein, dass die Halteeinrichtung der Vorrichtung eingestellt wird. Dieses Einstellen umfasst insbesondere das Positionieren einer von mehreren Hologrammmasteraufnahmen in den Belichtungsbereich. In den Hologrammmasteraufnahmen befinden sich unterschiedliche Hologrammmaster. In Abhängigkeit des ausgewählten Rezeptprogramms wird dann der im Rezeptprogramm vorgesehene Hologrammmaster zusammen mit der Hologrammmasteraufnahme in das Belichtungsfeld positioniert.

Im Verfahrensschritt 109 erfolgt das Belichten des Volumenhologramms, indem das Hologramm in dem Hologrammmaster rekonstruiert wird und in das holografische Aufzeichnungsmaterial hineinbelichtet bzw. kopiert wird. Hierzu werden die Verfahrensschritte 110-114 ausgeführt.

Im Verfahrensschritt 110 wird mittels der Laserstrahlungsquelle kohärente Laserstrahlung erzeugt. Diese kohärente Laserstrahlung wird anschließend im Verfahrensschritt 111 mittels des optischen Scanners gescannt, d.h. insbesondere auf ein zweidimensional ausgedehntes Strahlprofil gebracht. Im Verfahrensschritt 112 wird die gescannte Laserstrahlung mittels des Modulators moduliert. Die modulierte Laserstrahlung wird im Verfahrensschritt 113 mittels einer Abbildungsoptik abgebildet und im Verfahrensschritt 114 mittels der Umlenkspiegel auf die vorgegebene Position innerhalb des Belichtungsfelds umgelenkt. Anschließend wird der Hologrammmaster und das holografische Aufzeichnungsmaterial im Verfahrensschritt 115 mit der umgelenkten Laserstrahlung für eine vorgegebene Zeit bestrahlt und hierdurch das Volumenhologramm im Hologrammmaster rekonstruiert und in das holografische Aufzeichnungsmaterial
hineinbelichtet bzw. kopiert. Nach Ablauf der vorgegebenen Zeit wird das Bestrahlen beendet, indem die Steuerung die Laserstrahlungsquelle abschaltet.

Es kann vorgesehen sein, dass der Verfahrensschritt 109 anschließend wiederholt wird für ein anderes holografisches Aufzeichnungsmaterial bzw. ein anderes Wert- oder Sicherheitsdokument mit einem holografischen Aufzeichnungsmaterial.

Es kann alternativ auch vorgesehen sein, dass ein anderes Rezeptprogramm ausgewählt wird und anschließend im selben holografischen Aufzeichnungsmaterial bzw. im selben Wert- oder Sicherheitsdokument die Verfahrensschritte 101-115 für dieses andere Rezeptprogramm wiederholt werden. Hierdurch können verschiedene Volumenhologramme mit unterschiedlichen Belichtungsgeometrien und/oder -positionen in das holografische Aufzeichnungsmaterial bzw. das Wert- oder Sicherheitsdokument kopiert werden.

### Bezugszeichenliste

- 1: Vorrichtung
- 2: optischer Aufbau
- 3: Laserstrahlungsquelle
- 4: optischer Scanner
- 5: Modulator
- 6: Abbildungsoptik
- 7: Umlenkspiegel
- 8: Halteeinrichtung
- 9: optische Achse
- 10: Laserstrahlung
- 11: Hologrammmaster
- 12: holografisches Aufzeichnungsmaterial
- 13: Belichtungsfeld
- 14: Richtung
- 15: Winkel
- 16: Belichtungsposition
- 17: Belichtungswinkel
- 18: Antriebseinrichtung
- 19: Steuerung
- 20: Speicher
- 21: weiterer Umlenkspiegel
- 22: Rotationsachse
- 23: Richtung
- 24: Richtung
- 100-115: Verfahrensschritte

## Patentansprüche

1. Vorrichtung (1) zum Belichten eines Volumenhologramms, mit einem optischen Aufbau (2), wobei der optische Aufbau (2) entlang einer optischen Achse (9) umfasst:
mindestens eine Laserstrahlungsquelle (3) zum Bereitstellen einer kohärenten Laserstrahlung (10),
mindestens einen optischen Scanner (4) zum Scannen der Laserstrahlung (10), wobei der optische Scanner (4) ein zweidimensionaler optischer Scanner (4) ist, sodass die Laserstrahlung (10) in zwei Dimensionen gescannt und hierdurch ein zweidimensionales Strahlprofil erzeugt werden kann,
einen Modulator (5) zum Modulieren der gescannten Laserstrahlung (10), eine Abbildungsoptik (6) zum Abbilden der modulierten Laserstrahlung (10), mindestens einen Umlenkspiegel (7) zum Umlenken der abgebildeten Laserstrahlung (10), und eine Halteeinrichtung (8) mit einem Belichtungsfeld (13) zum Halten eines Hologrammmasters (11) und eines zu belichtenden holografischen Aufzeichnungsmaterials (12), die in der Halteeinrichtung (8) angeordnet werden können,
wobei der Umlenkspiegel (7) relativ zu dem Belichtungsfeld (13) drehbar und positionierbar ausgebildet ist, sodass die gescannte und modulierte Laserstrahlung (10) durch Umlenken über den mindestens einen Umlenkspiegel (7) beliebig innerhalb des Belichtungsfelds (13) positionierbar ist.

2. Vorrichtung (1) nach Anspruch 1, **dadurch gekennzeichnet, dass** der mindestens eine Umlenkspiegel (7) eine Antriebseinrichtung (18) umfasst, wobei die Antriebseinrichtung (18) derart ausgebildet ist, den mindestens einen Umlenkspiegel (7) gesteuert zu drehen und/oder zu positionieren.

3. Vorrichtung nach Anspruch 1 oder 2, **dadurch gekennzeichnet, dass** der optische Aufbau (2) mindestens einen weiteren Umlenkspiegel (21) umfasst.

4. Vorrichtung (1) nach einem der vorangegangenen Ansprüche, **dadurch gekennzeichnet, dass** die Vorrichtung (1) eine Steuerung (19) umfasst, wobei die Steuerung (19) derart ausgebildet ist, die mindestens eine Laserstrahlungsquelle (3) und/oder den mindestens einen optischen Scanner (4) und/oder den Modulator (5) und/oder die Abbildungsoptik (6) und/oder den mindestens einen Umlenkspiegel (7) zu steuern.

5. Vorrichtung (1) nach Anspruch 4, **dadurch gekennzeichnet, dass** die Steuerung (19) einen Speicher (20) umfasst, wobei in dem Speicher (20) mindestens ein Satz mit Parametern zum Steuern der mindestens einen Laserstrahlungsquelle (3) und/oder dem mindestens einen optischen Scanner (4) und/oder dem Modulator (5) und/oder der Abbildungsoptik (6) und/oder dem mindestens einen Umlenkspiegel (7) hinterlegt ist, wobei die Steuerung (19) derart ausgebildet ist, einen Satz mit Parametern aus dem Speicher (20) abzurufen und die Parameter des abgerufenen Satzes durch entsprechendes Ansteuern einzustellen.

6. Vorrichtung (1) nach einem der vorangegangenen Ansprüche, **dadurch gekennzeichnet, dass** die Halteeinrichtung (8) mindestens zwei Hologrammmasteraufnahmen umfasst, welche dazu ausgebildet sind, jeweils einen Hologrammmaster (11) zu halten, wobei die Halteeinrichtung (8) ferner derart ausgebildet ist, jede der Hologrammmasteraufnahmen mit einem darin aufgenommenen Hologrammmaster (11) in das Belichtungsfeld (13) positionieren zu können.

7. Verfahren zum Belichten eines Volumenhologramms, wobei das Belichten mittels einer Vorrichtung (1) gemäß einem der Ansprüche 1 bis 6 durchgeführt wird, wobei das Verfahren folgende Schritte umfasst:
Einstellen der mindestens einen Laserstrahlungsquelle (3), des mindestens einen optischen Scanners (4), des Modulators (5), der Abbildungsoptik (6) und des mindestens einen Umlenkspiegels (7) in Abhängigkeit eines zu kopierenden Hologrammmasters (11) und eines zu belichtenden holografischen Aufzeichnungsmaterials (12),
- Erzeugen von kohärenter Laserstrahlung (10) mittels der mindestens einen Laserstrahlungsquelle (3),
- zweidimensionales Scannen der kohärenten Laserstrahlung (10) mittels des optischen Scanners (4),
- Modulieren der gescannten Laserstrahlung (10) mittels des Modulators (5),
- Abbilden der gescannten und modulierten Laserstrahlung (10) mittels der Abbildungsoptik (6),
- Umlenken der abgebildeten Laserstrahlung (10) mittels des mindestens einen Umlenkspiegels (7) auf eine vorgegebene Position innerhalb des Belichtungsfelds (13),
- Bestrahlen des Hologrammmasters (11) und des holografischen Aufzeichnungsmaterials (12) mit der umgelenkten Laserstrahlung (10) für eine vorgegebene Zeit.

8. Verfahren nach Anspruch 7, **dadurch gekennzeichnet, dass** die Vorrichtung (1) eine Steuerung (19) umfasst, wobei das Einstellen der mindestens einen Laserstrahlungsquelle (3) und/oder des mindestens einen optischen Scanners (4) und/oder des Modulators (5) und/oder der Abbildungsoptik (6) und/oder des mindestens einen Umlenkspiegels (7) mittels der Steuerung (19) erfolgt.

9. Verfahren nach Anspruch 8, **dadurch gekennzeichnet, dass** die Steuerung (19) einen Speicher (20) umfasst, wobei in dem Speicher (20) mindestens ein Satz mit Parametern zum Steuern der mindestens einen Laserstrahlungsquelle (3) und/oder dem mindestens einen optischen Scanner (4) und/oder dem Modulator (5) und/oder der Abbildungsoptik (6) und/oder dem mindestens einen Umlenkspiegel (7) hinterlegt ist, wobei zum Einstellen ferner ein Satz mit Parametern aus dem Speicher (20) abgerufen wird und die Parameter des abgerufenen Satzes mittels der Steuerung (19) durch entsprechendes Ansteuern eingestellt werden.

10. Verfahren nach einem der Ansprüche 7 bis 9, **dadurch gekennzeichnet,**
**dass** die Halteeinrichtung (8) mindestens zwei
Hologrammmasteraufnahmen umfasst, welche dazu ausgebildet sind,
jeweils einen Hologrammmaster (11) zu halten, wobei die Halteeinrichtung (8) ferner derart ausgebildet ist, jede der Hologrammmasteraufnahmen mit einem darin aufgenommenen Hologrammmaster (11) in das Belichtungsfeld (13) positionieren zu können,
wobei zum Einstellen eine ausgewählte der Hologrammmasteraufnahmen mit dem darin aufgenommenen Hologrammmaster (11) in das Belichtungsfeld positioniert wird.

## Claims

1. Device (1) for illuminating a volume hologram, comprising an optical assembly (2),
wherein the optical assembly (2) comprises, along an optical axis (9):
at least one laser radiation source (3) for providing a coherent laser radiation (10), at least one optical scanner (4) for scanning the laser radiation (10), wherein the optical scanner (4) is a two-dimensional optical scanner (4) such that the laser radiation (10) can be scanned in two dimensions and thereby a two-dimensional beam profile can be generated, a modulator (5) for modulating the scanned laser radiation (10), an imaging optical system (6) for imaging the modulated laser radiation (10), at least one deflecting mirror (7) for deflecting the imaged laser radiation (10), and a holding device (8) with an exposure field (13) for holding a hologram master (11) and a holographic recording material (12) to be exposed, which can be arranged in the holding device (8), wherein the deflecting mirror (7) is rotatable and positionable relative to the exposure field (13), such that the scanned and modulated laser radiation (10) can be positioned at any location within the exposure field (13) by means of deflection via the at least one deflecting mirror (7).

2. Device (1) according to claim 1, **characterized in that** the at least one deflecting mirror (7) comprises a drive mechanism (18), wherein the drive mechanism (18) is configured to control the rotation and/or positioning of the at least one deflecting mirror (7) in a controlled manner.

3. Device according to claim 1 or 2, **characterized in that** the optical assembly (2) comprises at least one additional deflecting mirror (21).

4. Device (1) according to any one of the preceding claims, **characterized in that** the device (1) comprises a controller (19), wherein the controller (19) is configured to control the at least one laser radiation source (3) and/or the at least one optical scanner (4) and/or the modulator (5) and/or the imaging optical system (6) and/or the at least one deflecting mirror (7) .

5. Device (1) according to claim 4, **characterized in that** the controller (19) comprises a memory (20), wherein the memory (20) stores at least one set of parameters for controlling the at least one laser radiation source (3) and/or the at least one optical scanner (4) and/or the modulator (5) and/or imaging optical system (6) and/or the at least one deflecting mirror (7), wherein the controller (19) is configured to retrieve a set of parameters from the memory (20) and to set the parameters of the retrieved set by corresponding control.

6. Device (1) according to any of the preceding claims, **characterized in that** the holding device (8) comprises at least two hologram master recordings, each of which is configured to hold a hologram master (11), wherein the holding device (8) is further configured to be able to position each of the hologram master holders, with a hologram master (11) contained therein, into the exposure field (13).

7. Method for exposing a volume hologram, wherein the exposure is performed using a device (1) according to one of claims 1 through 6,
wherein the method comprises the following steps:
- adjusting the at least one laser radiation source (3), the at least one optical scanner (4), the modulator (5), the imaging optical system (6), and the at least one deflecting mirror (7) in accordance with a hologram master (11) to be copied and a holographic recording material (12) to be exposed,
- generating coherent laser radiation (10) using the at least one laser radiation source (3),
- two-dimensional scanning of the coherent laser radiation (10) by means of the optical scanner (4),
- modulating the scanned laser radiation (10) by means of the modulator (5),
- imaging the scanned and modulated laser radiation (10) by means of the imaging optical system (6),
- redirecting the imaged laser radiation (10) by means of the at least one redirecting mirror (7) to a predetermined position within the exposure field (13),
- irradiating the hologram master (11) and the holographic recording material (12) with the redirected laser radiation (10) for a specified time.

8. Method according to claim 7, **characterized in that** the device (1) comprises a controller (19), wherein the adjustment of the at least one laser radiation source (3) and/or the at least one optical scanner (4) and/or the modulator (5) and/or the imaging optical system (6) and/or the at least one deflecting mirror (7) is performed by means of the controller (19).

9. Method according to claim 8, **characterized in that** the controller (19) comprises a memory (20), wherein in the memory (20) at least one set of parameters for controlling the at least one laser radiation source (3) and/or the at least one optical scanner (4) and/or the modulator (5) and/or the imaging optical system (6) and/or the at least one deflecting mirror (7) is stored, wherein, for adjustment, a set of parameters is further retrieved from the memory (20) and the parameters of the retrieved set are adjusted by means of the controller (19) through corresponding control.

10. Method according to any one of claims 7 through 9, **characterized in that** the holding device (8) comprises at least two hologram master holders, each of which is designed to hold a hologram master (11), wherein the holding device (8) is further configured to be able to position each of the hologram master holders, with a hologram master (11) housed therein, into the exposure field (13),
wherein, for the adjusting, a selected one of the hologram master holders, with the hologram master (11) housed therein, is positioned into the exposure field.

## Revendications

1. Dispositif (1) destiné à éclairer un hologramme en volume, comprenant un ensemble optique (2), dans lequel l'ensemble optique (2) comprend, le long d'un axe optique (9):
au moins une source de rayonnement laser (3) destinée à fournir un rayonnement laser cohérent (10),
au moins un scanner optique (4) destiné à balayer le rayonnement laser (10), le scanner optique (4) étant un scanner optique bidimensionnel (4) de telle sorte que le rayonnement laser (10) puisse être balayé en deux dimensions et qu'un profil de faisceau bidimensionnel puisse ainsi être généré, un modulateur (5) destiné à moduler le rayonnement laser balayé (10), un système optique d'imagerie (6) destiné à imager le rayonnement laser modulé (10), au moins un miroir de déviation (7) destiné à dévier le rayonnement laser imagé (10), et un dispositif de maintien (8) comportant un champ d'exposition (13) destiné à maintenir un maître holographique (11) et un matériau d'enregistrement holographique (12) à exposer, qui peuvent être disposé dans le dispositif de maintien (8),
dans lequel le miroir de déviation (7) est rotatif et positionnable par rapport au champ d'exposition (13), de telle sorte que le rayonnement laser balayé et modulé (10) puisse être positionné en tout point à l'intérieur du champ d'exposition (13) par déviation au moyen de l'au moins un miroir de déviation (7).

2. Dispositif (1) selon la revendication 1, **caractérisé en ce que** le au moins un miroir de déviation (7) comprend un mécanisme d'entraînement (18), le mécanisme d'entraînement (18) étant configuré pour commander de manière contrôlée la rotation et/ou le positionnement du au moins un miroir de déviation (7).

3. Dispositif selon la revendication 1 ou 2, **caractérisé en ce que** l'ensemble optique (2) comprend au moins un miroir de déviation supplémentaire (21).

4. Dispositif (1) selon l'une quelconque des revendications précédentes, **caractérisé en ce que** le dispositif (1) comprend un contrôleur (19), ledit contrôleur (19) étant configuré pour commander la au moins une source de rayonnement laser (3) et/ou le au moins un scanner optique (4) et/ou le modulateur (5) et/ou le système optique d'imagerie (6) et/ou le au moins un miroir de déviation (7).

5. Dispositif (1) selon la revendication 4, **caractérisé en ce que** le contrôleur (19) comprend une mémoire (20), la mémoire (20) stockant au moins un ensemble de paramètres pour commander la au moins une source de rayonnement laser (3) et/ou le au moins un scanner optique (4) et/ou le modulateur (5) et/ou le système optique d'imagerie (6) et/ou le au moins un miroir de déviation (7), le contrôleur (19) étant configuré pour extraire un jeu de paramètres de la mémoire (20) et pour régler les paramètres du jeu extrait au moyen d'une commande correspondante.

6. Dispositif (1) selon l'une quelconque des revendications précédentes, **caractérisé en ce que** le dispositif de maintien (8) comprend au moins deux supports d'enregistrements maître holographiques, chacun étant configuré pour maintenir un maître holographique (11), le dispositif de maintien (8) étant configuré pour pouvoir positionner chacun des supports d'enregistrements holographiques, chacun contenant un maître holographique (11), dans le champ d'exposition (13).

7. Procédé d'exposition d'un hologramme volumique, dans lequel l'exposition est réalisée à l'aide d'un dispositif (1) selon l'une des revendications 1 à 6,
dans lequel le procédé comprend les étapes suivantes:
- le réglage de la au moins une source de rayonnement laser (3), du au moins un scanner optique (4), du modulateur (5), du système optique d'imagerie (6) et du au moins un miroir de déviation (7) en fonction d'un maître holographique (11) à copier et d'un support d'enregistrement holographique (12) à exposer,
- générer un rayonnement laser cohérent (10) à l'aide de la au moins une source de rayonnement laser (3),
- balayer en deux dimensions le rayonnement laser cohérent (10) au moyen du scanner optique (4),
- moduler le rayonnement laser balayé (10) au moyen du modulateur (5),
- imager le rayonnement laser balayé et modulé (10) au moyen du système optique d'imagerie (6),
- redigirer le rayonnement laser imagé (10) au moyen de l'au moins un miroir de déviation (7) vers une position prédéterminée à l'intérieur du champ d'exposition (13),
- irradier le maître holographique (11) et le support d'enregistrement holographique (12) avec le rayonnement laser redirigé (10) pendant une durée spécifiée.

8. Procédé selon la revendication 7, **caractérisé en ce que** le dispositif (1) comprend un contrôleur (19), dans lequel le réglage de la au moins une source de rayonnement laser (3) et/ou du au moins un scanner optique (4) et/ou du modulateur (5) et/ou du système optique d'imagerie (6) et/ou de l'au moins un miroir de déviation (7) est effectué au moyen du contrôleur (19).

9. Procédé selon la revendication 8, **caractérisé en ce que** le contrôleur (19) comprend une mémoire (20), dans lequel au moins un ensemble de paramètres pour commander l'au moins une source de rayonnement laser (3) et/ou l'au moins un scanner optique (4) et/ou le modulateur (5) et/ou le système optique d'imagerie (6) et/ou l'au moins un miroir de déviation (7) est stocké dans la mémoire (20), un jeu de paramètres étant extrait de la mémoire (20) à des fins de réglage, et les paramètres du jeu extrait étant réglés au moyen du contrôleur (19) par une commande correspondante.

10. Procédé selon l'une quelconque des revendications 7 à 9, **caractérisé en ce que** le dispositif de maintien (8) comprend au moins deux supports de maître holographique, chacun étant conçu pour maintenir un maître holographique (11), le dispositif de maintien (8) étant configuré pour pouvoir positionner chacun des supports de maître holographique, avec un maître holographique (11) logée à l'intérieur, dans le champ d'exposition (13),
dans lequel, pour le réglage, l'un des supports de maître holographique sélectionnés, contenant le maître holographique (11), est positionné dans le champ d'exposition.
